# EUROPÄISCHE PATENTSCHRIFT

(11) **EP 0 528 354 B1**
(45) Veröffentlichungstag und Bekanntmachung des Hinweises auf die Patenterteilung: **13.04.1994**
(21) Anmeldenummer: 92113770.9
(22) Anmeldetag: 12.08.1992
(51) Int. Cl.: E06B 5/10, F41H 5/04, B32B 17/10, E06B 3/66

(54) **Beschusshemmendes Isolierglaselement**
Bullet-proof insulating glazing unit
Vitrage isolant blindé

(30) Priorität: 12.08.1991 DE 4126637
(43) Veröffentlichungstag der Anmeldung: 24.02.1993
(73) Patentinhaber: WICONA BAUSYSTEME GMBH & CO. KG, D-89077 Ulm (DE)
(72) Erfinder: Schulz, Harald, Dr., W-8879 Ettenbeuren (DE)
(74) Vertreter: Fay, Hermann, Dipl.-Phys. Dr.

(56) Entgegenhaltungen:
- EP-A- 0 109 566
- DE-U- 8 512 515

## Beschreibung

Die Erfindung betrifft ein beschußhemmendes Isolierglaselement für insbesondere aus mehreren solcher Elemente und Rahmen bestehender Fassaden- oder Wandkonstruktionen wie es im Anspruch 1 beschrieben ist.

Es ist bekannt, Wandkonstruktionen, z.B. Gebäudefassaden bei sicherheitsgefährdeten Objekten, beschußhemmend auszubilden. Sofern solche Fassaden- oder Wandkonstruktionen durchsichtig ausgebildet werden sollen, werden beschußhemmende Glaselemente angeordnet. Im Hinblick auf die hohen Anforderungen an die Wärmedämmung werden im allgemeinen beschußhemmende Isolierglaselemente eingesetzt. Aus der DE-OS 29 01 951 ist ein solches beschußhemmendes Isolierglaselement bekannt. Die isolierende Glasebene wird hierbei von zwei, über Abstandhalter voneinander beabstandeten Einzelscheiben gebildet. Der sich somit ergebende Luftzwischenraum sorgt für die angestrebte gute Wärmedämmung. Die beschußhemmende Glasebene wird von an den Einzelscheiben angeordneten miteinander verklebten weiteren Einzelscheiben gebildet. Dadurch entstehen sogenannte Verbundglaspakete, welche aus mehreren, hintereinander angeordneten Einzelscheiben aufgebaut sind, die an ihren sich wechselseitig berührenden Oberflächen durch Folien, Gießharz, PC oder PMMA miteinander fest verbunden sind.

Solange dieses bekannte beschußhemmende Isolierglaselement mit seinen Umfangsrändern an weiteren beschußhemmenden Elementen unmittelbar anliegend angeordnet ist, beispielsweise bei einer Anordnung über Eck oder einem direkten Anschluß an eine beschußhemmende Wand, kann die jeweils geforderte Beschußhemmung erfüllt sein. Aus herstellungs-, transporttechnischen sowie architektonischen Gründen sind jedoch die Abmessungen der beschußhemmenden Isolierglaselemente beschränkt. Bei Fassaden- oder Wandkonstruktionen werden deshalb eine Vielzahl einzelner beschußhemmender Isolierglaselemente benötigt, die zueinander auf Abstand angeordnet sein müssen, um die Elemente, die letztlich den Rahmen bilden, anordnen zu können, die eine haltende Einspannung der Ränder der einzelnen Isolierglaselemente ermöglichen. Sofern im Randbereich der beschußhemmenden Isolierglaselemente ein Schrägbeschuß erfolgt, bei dem die Schußbahn im beschußhemmenden Isolierglaselement, d.h. zu dessen Hauptebene schräg verläuft, können die Geschosse im Kantenbereich der Isolierglaselemente austreten. Danach müssen die Geschosse lediglich noch die bezeichneten Elemente der Fassadenkonstruktion durchdringen, um in den zu schützenden Bereich zu gelangen. Bei den die beschußhemmenden Isolierglaselemente haltenden Elementen der Fassade handelt es sich in der Regel um Verbundprofilanordnungen, insbesondere in Form von Hohlkammerprofilen aus Aluminium, die keine ausreichende beschußhemmende Wirkung aufweisen. Da beim Schrägbeschuß die Geschosse lediglich einen Teil der Einzelscheiben des Verbundglaspaketes durchdringen müssen, stellt dies eine Gefahr für den zu schützenden Bereich dar. Die Beschußhemmung der beschußhemmenden Isolierglaselemente kann bei Schrägbeschuß im Einzelfall äußerst stark herabgesetzt sein.

Um diesen Nachteil zu vermeiden, ist es bekannt, Stahleinlagen an den Elementen der Fassade im Bereich zwischen benachbarten Isolierglaselementen vorzusehen. Im Einzelfall müssen mehrere solcher Stahleinlagen vorgesehen werden, die beispielsweise in Hohlräumen entsprechender Hohlkammerprofile angeordnet sein können. Die Anordnung solcher Stahleinlagen ist äußerst arbeitsaufwendig, da eine Reihe von zusätzlichen Arbeitsschritten bei der Herstellung entsprechender Fassadenkonstruktionen erforderlich ist. So müssen die Stahleinlagen beispielsweise entsprechend der Länge der zu schützenden Elemente der Fassadenkonstruktion abgelängt und an im Regelfall schwer zugänglichen Stellen eingebracht, gesichert und befestigt werden. Mitunter sind noch zusätzliche Stahleckstücke im Bereich von Eckverbindungen zu berücksichtigen, die die Fassadenkonstruktion auch in dessen Eckbereichen gegen Beschuß schützen soll. Ein weiteres Problem solcher Stahleinlagen besteht in der Unterbrechung des angestrebten schlechten Wärmedurchgangs in den entsprechenden Bereichen der Fassade. Es kann deshalb erforderlich sein, zusätzliche Isoliereinlagen anzuordnen, die wiederum zusätzliche Kosten durch Herstellung und vor allem durch die Montage verursachen.

Aus der DE-GM 78 24 888 ist ein beschußhemmendes Glaselement ohne isolierende Eigenschaften bekannt. Im Randbereich sind die Rahmenteile der das beschußhemmende Glaselement tragenden Teile durch zusätzliche Stahleinlagen geschützt. Ferner weist der Randbereich des beschußhemmenden Glaselements eine, dieses fest anliegend umfassende schußsichere Einfassung in Form eines im Querschnitt U-förmigen Hartstahlprofils auf. Durch diese schußsichere Einfassung entsteht eine Kältebrücke, so daß das vorgeschlagene beschußhemmende Glaselement nicht für Fassaden- oder Wandkonstruktionen verwendet werden kann, bei denen auch nur geringe Anforderungen im Hinblick auf die Wärmedämmung vorhanden sind. Durch die direkte Anlage der schußsicheren Einfassung über den gesamten Bereich der Kante des beschußhemmenden Glaselementes sowie den anschließenden Bereich der Oberflächen des Glaselementes ist dessen Einsatz bei isolierenden beschußhemmenden Glaselementen durch den fehlenden Dampfdruckausgleich nicht möglich. Ferner könnte sich im Bereich der Abstandhalter der die Isolierung bedingenden Einzelscheiben ansammelnde Feuchtigkeit nicht entweichen und würde nach kurzer Zeit durch den Abstandhalter hindurch in den Luftzwischenraum zwischen die Einzelscheiben eintreten, was aber unbedingt vermieden werden muß.

Es ist Aufgabe der vorliegenden Erfindung, ein beschußhemmendes Isolierglaselement so auszubilden, daß auch bei einem Schrägbeschuß zusätzliche schußsichere Einlagen an den Elementen der Fassaden- oder Wandkonstruktion benachbarter, voneinander beabstandeter beschußhemmender Isolierglaselemente entbehrlich sind, wobei eine Herabsetzung der Wärmedämmung der Isolierglaselemente bei gleichzeitiger Ermöglichung eines Dampfdruckausgleiches im Bereich der isolierenden Glasebene vermieden wird.

Die Aufgabe wird durch ein beschußhemmendes Isolierglaselement mit dem im Anspruch 1 angegebenen Merkmalen gelöst.

Vorteilhafte Weiterbildungen ergeben sich aus den Unteransprüchen.

Aufgrund der vorgeschlagenen beschußhemmenden Beplankung weist das beschußhemmende Isolierglaselement auch bei einem Schrägbeschuß im Randbereich des selben die erforderliche Beschußhemmung auf. Dadurch entfällt die Anordnung zusätzlicher Stahleinlagen an den Elementen der Fassaden- oder Wandkonstruktion im Bereich zwischen den Kanten benachbarter und voneinander beabstandeter Isolierglaselemente. Gleichzeitig wird in diesen Bereich die Wärmedämmung nicht, zumindest jedoch nicht wesentlich negativ beeinflußt. Insbesondere ist auch die erforderliche Belüftung im Kantenbereich der isolierenden Glasebene gegeben, d.h. der erforderliche Dampfdruckausgleich in diesem Bereich ist gegebem. Entsprechend den jeweiligen Dimensionen der Isolierglaselemente einerseits und der Fassadenkonstruktion andererseits müssen dabei nicht sämtliche, die beschußhemmende Glasebene bildende weiteren Einzelscheiben in ihren jeweiligen Kantenbereichen durch die beschußhemmende Beplankung geschützt sein. Die isolierende Glasebene kann auch von mehr als zwei, jeweils über Abstandhalter beabstandeten Einzelscheiben bestehen. Die die beschußhemmende Glasebene bildenden weiteren Einzelscheiben, die ein sogenanntes Verbundglaspaket bilden, können entweder - von der zu sichernden Seite aus gesehen - vor oder hinter der isolierenden Glasebene oder auch beidseits angeordnet sein. Die entsprechende Anordnung sowie die Anzahl und Querschnittsdicke der weiteren Einzelscheiben ist insbesondere von der angestrebten Beschußhemmung abhängig. Sollte als beschußhemmende Glasebene lediglich eine einzige weitere Glasscheibe ausreichend sein, könnte die Beplankung analog auch nur in einem Bereich der entsprechenden Kante angeordnet sein, d.h. nur einen bestimmten Bereich der Kanten ab- bzw. überdecken.

Vorteilhafterweise ragt zumindest im Bereich der Beplankung der freie Rand der beabstandeten Einzelscheiben über den der weiteren Einzelscheiben hinaus. Durch diese Maßnahme wird zumindest ein Teil der Beplankung durch die isolierend wirkenden, voneinander beabstandeten Einzelscheiben abgedeckt, was die angestrebte Wärmedämmung in diesem Bereich zusätzlich positiv beeinflußt.

Dabei ist zweckmäßigerweise die Beplankung in ihrer Querschnittsdicke so ausgelegt, daß der entsprechende Rand bzw. die Kante des Isolierglaselements bündig ausgebildet ist. Durch die bündige Ausbildung ergeben sich Vorteile beim Transport sowie beim Einbau der beschußhemmenden Isolierglaselemente.

Mit Vorteil ist die Beplankung mit dem freien Rand bzw. den Kanten der einzelnen weiteren Einzelscheiben des Isolierglaselements fest verbunden. Das Isolierglaselement kann somit u.a. vor dessen Einbau mit der Beplankung versehen werden. Ferner entfallen zusätzliche Maßnahmen zur Lagesicherung der Beplankung am Isolierglaselement.

Vorteilhafterweise ist die Beplankung als um den Glasrand herum geführter, geschlossener Rahmen ausgebildet. Ein entsprechend ausgebildetes Isolierglaselement kann dann an beliebiger Stelle einer Fassadenkonstruktion eingesetzt werden.

Insbesondere bei rahmenartigen Ausbildungen der Beplankung ist diese an den Ecken des Isolierglaselementes verschweißt. Diese Maßnahme erhöht zusätzlich die Lagesicherung der Beplankung an dem Isolierglaselement und verringert weiterhin die Gefahr, daß sich die Beplankung bei dauerhaftem Schrägbeschuß vom Kantenbereich des Isolierglaselementes löst.

Die Anordnung der Beplankung an den Kanten der weiteren Einzelscheiben kann über eine Verklebung erfolgen, wobei dazu insbesondere Epoxydharz-Kleber, Silikon oder Polysulfid verwendet werden.

Weiterhin kann die Beplankung durch ein am Isolierglaselement anliegendes Stützprofil, welches an den Elementen der entsprechenden Fassaden- oder Wandkonstruktion angeordnet ist, zusätzlich gesichert werden. Diese Maßnahme erhöht die Sicherheit der festen Verbindung zwischen der Beplankung und den Kanten der weiteren Einzelscheiben.

Die Beplankung besteht zweckmäßigerweise aus Metall, insbesondere hochfestem Stahl, um die angestrebte Beschußhemmung des Isolierglaselementes zu erhalten.

Der Stahl ist dabei zur Verhinderung von Korrosionsschäden zweckmäßigerweise nichtrostend oder feuerverzinkt oder korrosionsfest beschichtet.

Als vorteilhaftes Material für die Beplankung hat sich daneben auch hochfester Kunststoff, wie z.B. Keflar oder Keramikmaterial bewährt.

Die Erfindung wird nachfolgend anhand einiger bevorzugter Ausführungsbeispiele näher beschrieben. Es zeigen:
- Fig. 1 bis 3: Horizontalschnitte durch eine Fassadenkonstruktion in den Randbereichen benachbarter beschußhemmender Isolierglaselemente,
- Fig. 4 und 5: Querschnitte durch verschiedene beschußhemmende Glaselemente und
- Fig. 6: einen Querschnitt durch die Hauptebene einer als Rahmen ausgebildeten Beplankung eines beschußhemmenden Isolierglaselements.

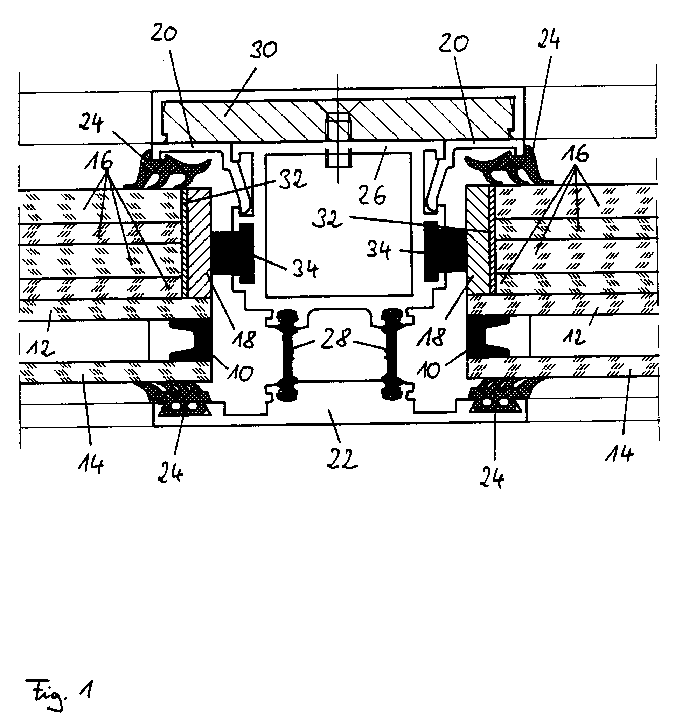

Der Querschnitt gemäß Fig. 1 zeigt die Anordnung zweier voneinander beabstandeter beschußhemmender Isolierglaselemente, beispielsweise einer Fassadenkonstruktion. Die Isolierglaselemente bestehen jeweils aus, eine beschußhemmende Glasebene bildenden weiteren, miteinander verbundenen Einzelscheiben 16, die zusammen ein sogenanntes Verbundglaspaket bilden, und zwei beabstandeten Einzelscheiben 12, 14 zur Bildung einer isolierenden Glasebene. Die Einzelscheiben 12, 14 sind über einen Abstandhalter 10 miteinander verbunden. Wie auch die Einzelscheiben 16 mit ihren jeweils zugewandten Oberflächen miteinander verklebt sind, sind auch die Einzelscheibe 12 und die ihr entsprechend zugewandte Einzelscheibe 16 des Verbundglaspaketes miteinander verklebt, wobei auch andere Arten der Anordnung des Verbundglaspaketes an der Einzelscheibe 12 denkbar sind. Die Verklebung erfolgt dabei beispielsweise über eine Folie, Gießharz, PC oder PMMA.

Die Einspannung der beiden Isolierglaselemente in der Fassadenkonstruktion erfolgt über eine Verbundprofilanordnung. Die gezeigte Verbundprofilanordnung besteht im wesentlichen aus einem Hohlkammerprofil 26, welches über aus Kunststoff bestehende Isolierstege 28 mit einem Einzelprofil 22 verbunden ist. Glashalteleisten 20 sind in das Hohlkammerprofil 26 eingeklipst. An den Glashalteleisten 20 sowie an dem Einzelprofil 22 sind zur klemmenden Halterung der Isolierglaselemente in deren Randbereich Dichtungen 24 angeordnet.

Das Hohlkammerprofil 26 sowie die beiden anschließenden Glashalteleisten 20 übergreifend ist eine Stahleinlage 30 vorgesehen, die den Bereich zwischen den beiden Isolierglaselementen, d.h. die dort angeordneten Elemente der Fassade, im Hinblick auf einen direkten Durchschuß in diesem Bereich schützt. Diese Beschußhemmung ist stets erforderlich, kann in diesem Bereich jedoch lediglich eine Beschußhemmung bei zur Hauptebene der Isolierglaselemente weitgehendst senkrechtem Beschuß darstellen. Eine Sicherung gegen Schrägbeschuß, lediglich durch einen Teil des Isolierglaselementes, ist dadurch jedoch nicht gegeben. Bei dem dargestellten Querschnitt kann der Bereich mit der Stahleinlage 30 entweder auf der zu schützenden oder der entsprechend anderen Seite angeordnet sein.

Schutz gegen einen Schrägbeschuß im Randbereich der Isolierglaselemente bildet eine an den Kanten der Einzelscheiben angeordnete Beplankung 18. Die Beplankung 18 ist am freien Rand eines jeden Isolierglaselementes entlang der Kanten der Einzelscheiben 16 angeordnet. Die Beplankung 18 könnte auch noch an den Kanten der Einzelscheiben 12, 14 angeordnet sein, wenn dies gewünscht wäre. Der Abstandhalter 10 ist jedoch von der Beplankung 18 freigehalten. Die Beplankung 18 ist mit den Kanten der Einzelscheiben 16 über eine Verklebung 32 fest verbunden. Das Hohlkammerprofil 26 ist vorzugsweise so angeordnet, daß die Beplankung 18 diesem gegenüberliegend vorgesehen ist. Zur zusätzlichen Sicherung der Beplankung 18 können in diesem Fall Stützprofile 34 an den entsprechenden Seitenwänden des Hohlkammerprofils 26 in üblicher Weise an diesem in Hinterschneidungen angeordnet sein. Die Stützprofile 34 sind im Querschnitt so ausgebildet, daß sie sich an der Beplankung 18 mit ihrem freien Endbereich abstützen und dadurch die Beplankung 18 zusätzlich festhalten bzw. an den Kanten der Einzelscheiben 16 zusätzlich sichern.

Aus Fig. 1 ist ersichtlich, daß die Anordnung der beschußhemmenden Beplankung 18 an den Kanten der die beschußhemmende Glasebene bildenden Einzelscheiben 16 - unabhängig von der jeweils gewählten Fassaden- bzw. Wandkonstruktion - im Bereich beabstandeter Isolierglaselemente auf einfache Weise eine ausreichende Beschußhemmung bei jeder Art von Schrägbeschuß bildet, d.h. jede erdenkbare Schußbahn verläuft entweder durch die gesamte Dicke der beschußhemmenden Glasebene oder trifft auf die beschußhemmende Beplankung 18. Da die Beplankung 18 lediglich im Bereich der Kanten der Einzelscheiben 16 angeordnet ist, entsteht auch keine Kältebrücke. Ferner verhindert die Beplankung 18 auch nicht den Dampfdruckausgleich im Bereich des Abstandhalters 10.

Wie in Fig. 1 dargestellt, ragt der freie Rand der die isolierende Glasebene bildenden Einzelscheiben 12, 14 über den freien Rand der Einzelscheiben 16 hinaus. In dem dadurch entstehenden Absatz bzw. der dadurch entsehenden Stufe in der Kante des gesamten Isolierglaselements ist die Beplankung 18 vorzugsweise so angeordnet, daß die Kante des gesamten Isolierglaselementes keinen Sprung bzw. keine Stufe mehr aufweist, also bündig verläuft. Diese Überdeckung des entsprechenden Bereiches der Beplankung 18 durch die Einzelscheiben 12, 14 fördert die angestrebte gute Wärmedämmung zusätzlich.

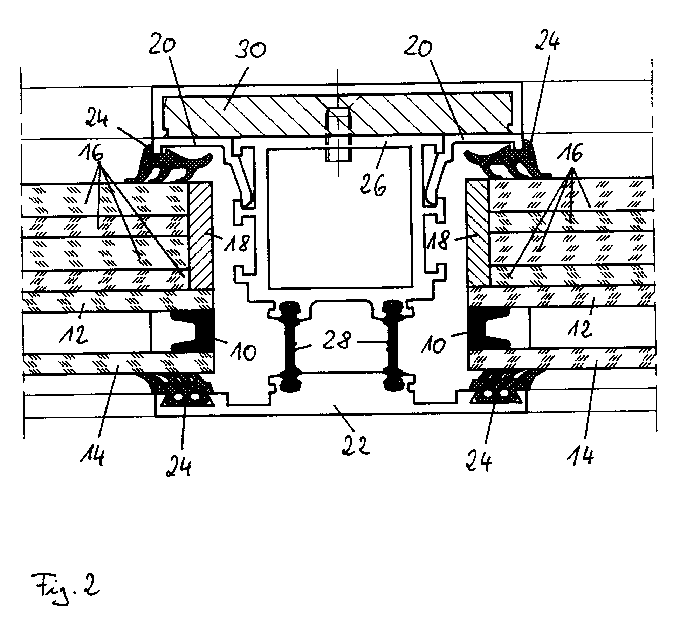

Fig. 2 entspricht der Darstellung gemäß Fig. 1, wobei hier lediglich die Stützprofile 34 weggelassen wurden sowie zwischen Beplankung 18 und den Kanten der Einzelscheiben 16 keine Verklebung 32 vorhanden ist.

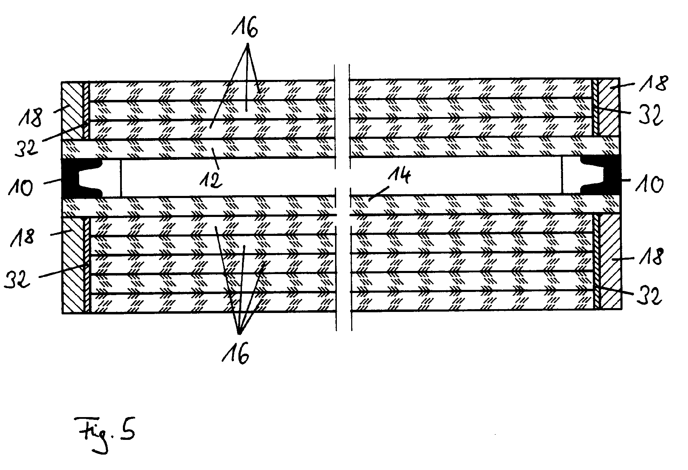

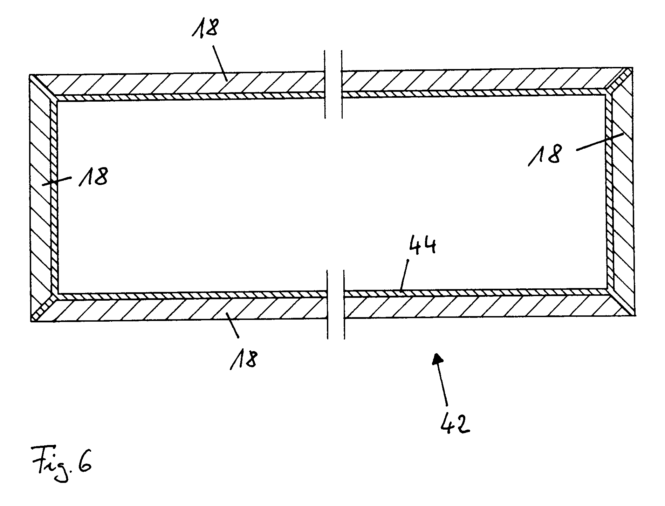

Fig. 2 zeigt insoweit lediglich, daß es sich bei den Stützprofilen 34 sowie der Verklebung 32 gemäß Fig. 1 um zusätzliche, jedoch nicht erforderliche Maßnahmen handelt. Der Wegfall der Verklebung 32 wird durch eine rahmenartige Ausbildung der Beplankung 18 - wie dies in Fig. 7 gezeigt und dort näher erläutert wird - sowie eine Verschweißung der Beplankung 18 im Eckbereich der Isolierglaselemente erreicht.

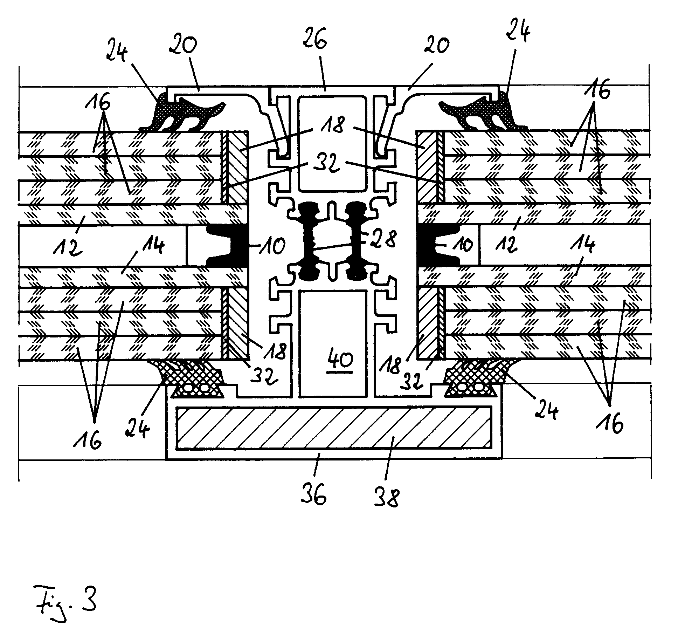

Fig. 3 entspricht grundsätzlich den Darstellungen gemäß der Fig. 1 und 2, wobei identische Teile mit identischen Bezugsziffern versehen wurden. Der Unterschied besteht in der Anordnung zweier Verbundglaspakete in Form von Einzelscheiben 16, einmal an der Einzelscheibe 12 und einmal an der Einzelscheibe 14. Die isolierende Glasscheibenebene ist somit zwischen zwei beschußhemmenden Glasebenen eingebettet. Entscheidend ist hierbei wiederum, daß sich die nunmehr sozusagen geteilte Beplankung 18 an den Kanten der Einzelscheiben 16 befindet, nicht jedoch am Abstandhalter 10 selbst, wobei im Bedarfsfall noch die Kanten der Einzelscheiben 12, 14 von der Beplankung 18 abgedeckt sein könnten. In Fig. 3 weisen die Glashalteleisten 20 sowie das Hohlkammerprofil 26 keine Überdeckung durch eine Stahleinlage auf, in diesem Fall wurde auf der gegenüberliegenden Seite ein Einzelprofil 36 gewählt, das auf der den Einzelscheiben 16 abgewandten Seite hohlkammerförmig ausgebildet ist und in dieser Hohlkammer eine Stahleinlage 38 aufweist. Zusätzlich ist an dem Einzelprofil 36 eine nach innen zu den Isolierstegen 18 reichende weitere Hohlkammer 40 ausgebildet, an deren einer Seitenwand die Isolierstege 28 angeordnet sind. Auch in Fig. 3 ragen die freien Kanten der Einzelscheiben 12, 14 über die der Einzelscheiben 16 hinaus, so daß sich trotz Anordnung der Beplankung 18 am Isolierglaselement eine bündige Kante ergibt.

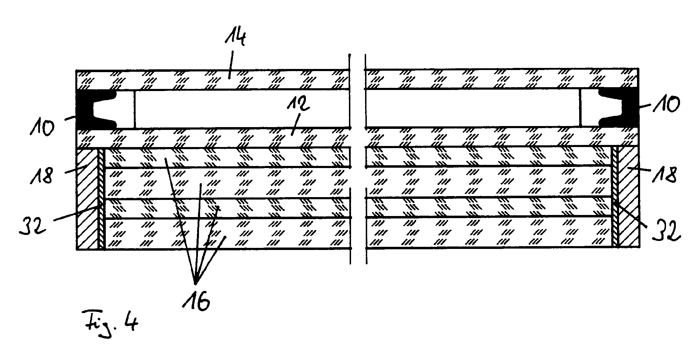

Fig. 4 zeigt das beschußhemmende Isolierglaselement gemäß Fig. 1 im Querschnitt alleine. Die Bezugsziffern entsprechen denen gemäß Fig. 1. Sofern es aufgrund der jeweiligen Abmessungen und der geforderten Beschußhemmung möglich ist, können die Kanten der einen oder anderen Einzelscheibe 16 auch von der Beplankung 18 freigehalten werden. In diesem Fall könnten sich die Kanten der freigehaltenen Einzelscheiben 16 bis zu denen der Einzelscheiben 12, 14 hin erstrekken. So könnte beispielsweise die direkt an der Einzelscheibe 12 anliegende Einzelscheibe 16 und/oder die der Einzelscheibe 12 am entferntesten liegende Einzelscheibe 16 von der Beplankung 18 freigehalten und wie beschrieben ausgebildet sein.

Fig. 5 zeigt ein grundsätzlich der Fig. 3 entsprechendes beschußhemmendes Isolierglaselement für sich allein. Wiederum weisen die identischen Teile identische Bezugsziffern auf. Unterschiedlich zu Fig. 3 ist lediglich die Anzahl der Einzelscheiben 16, die sich an die Einzelscheibe 14 anschließen. Hier soll lediglich gezeigt werden, daß die Anzahl der Einzelscheiben 16 eines jeden Verbundglaspaketes gemäß den entsprechenden Anforderungen unterschiedlich sein kann, wobei im Extremfall sogar eine einzige Einzelscheibe 16 ausreichend sein könnte.

Fig. 6 zeigt schließlich die Ausbildung der Beplankung 18 als um den Glasrand bzw. die Kante eines nicht dargestellten beschußhemmenden Isolierglaselementes herum geführter, geschlossener Rahmen 42. Dabei besteht der Rahmen 42 aus vier Einzelteilen einer Beplankung 18 bei einem im Regelfall rechteckig geformten Isolierglaselement. Die jeweilige Beplankung 18 ist gemäß Fig. 6 über eine Verklebung 44 mit dem nicht dargestellten Isolierglaselement verbunden. Die freien Enden der Beplankung 18 sind auf Gehrung geschnitten und in diesem Bereich ebenfalls über die Verklebung 44 miteinander verbunden. Alternativ kann die Verklebung 44 entfallen. Im Bereich der Gehrung können dann die einzelnen Teile der Beplankung 18 verschweißt werden. Anstelle der dargestellten Gehrung können die einzelnen Teile der Beplankung 18 zur Rahmenbildung auch auf Stoß ausgebildet sein.

### Bezugszeichenliste

- 10: Abstandhalter
- 12, 14: Einzelscheiben (Isolierung)
- 16: Einzelscheiben (Beschuß)
- 18: Beplankung
- 20: Glashalteleiste
- 22: Einzelprofil
- 24: Dichtung
- 26: Hohlkammerprofil
- 28: Isoliersteg
- 30: Stahleinlage
- 32: Verklebung
- 34: Stützprofil
- 36: Einzelprofil
- 38: Stahleinlage
- 40: Hohlkammer
- 42: Rahmen
- 44: Verklebung

## Patentansprüche

1. Beschußhemmendes Isolierglaselement für insbesondere aus mehreren solcher Elemente bestehender Wand- oder Fassadenkonstruktionen mit wenigstens zwei, voneinander über Abstandhalter (10) beabstandeten Einzelscheiben (12, 14) zur Bildung der isolierenden Glasebene sowie an zumindest eine dieser Einzelscheiben (12, 14) anschließende weitere, miteinander verbundene Einzelscheiben (16) zur Bildung der beschußhemmenden Glasebene, bei welcher zumindest mehrere der weiteren Einzelscheiben (16) eine, an wenigstens einem ihrer freien Ränder entlang der entsprechenden Kanten angeordnete beschußhemmende Beplankung (18) aufweisen, wobei der Abstandhalter (10) selbst von der Beplankung (18) freigehalten ist.

2. Isolierglaselement nach Anspruch 1, bei welchem zumindest im Bereich der Beplankung (18) der freie Rand der beabstandeten Einzelscheiben (12, 14) über den der weiteren Einzelscheiben (16) hinausragt.

3. Isolierglaselement nach Anspruch 1 oder 2, bei welchem die Beplankung (18) in ihrer Querschnittsdicke so ausgelegt ist, daß der entsprechende Rand des Isolierglaselements bündig ausgebildet ist.

4. Isolierglaselement nach einem der Ansprüche 1 bis 3, bei welchem die Beplankung (18) mit dem freien Rand des Isolierglaselements fest verbunden ist.

5. Isolierglaselement nach einem der Ansprüche 1 bis 4, bei welchem die Beplankung (18) als um den Glasrand herum geführter, geschlossener Rahmen (42) ausgebildet ist.

6. Isolierglaselement nach Anspruch 5, bei welchem die Beplankung (18) an den Ecken verschweißt ist.

7. Isolierglaselement nach einem der Ansprüche 1 bis 6, bei welchem die Beplankung (18) mit dem Glasrand verklebt ist, z.B. über einen Epoxydharz-Kleber, Silikon oder Polysulfid.

8. Isolierglaselement nach einem der Ansprüche 1 bis 7, bei welchem die Beplankung (18) durch ein an dieser anliegendes Stützprofil (34), welches an Elementen einer Wand- oder Fassadenkonstruktion angeordnet ist, zusätzlich gesichert ist.

9. Isolierglaselement nach einem der Ansprüche 1 bis 8, bei welchem die Beplankung (18) aus Metall, insbesondere hochfestem Stahl besteht.

10. Isolierglaselement nach Anspruch 9, bei welchem der Stahl nichtrostend, feuerverzinkt oder korrosionsfest beschichtet ist.

11. Isolierglaselement nach einem der Ansprüche 1 bis 5 oder 7 bis 8, bei welchem die Beplankung (18) aus einem hochfestem Kunststoff, z.B. Kevlar oder Keramikmaterial besteht.

## Claims

1. A bombardment-resistant insulating glass element for in particular wall or facade structures comprising a plurality of such elements, having at least two individual panes (12, 14) which are spaced by way of spacers (10) for forming the insulating glass pane and adjoining at least one of said individual panes (12, 14) further individual panes (16) which are connected together, to form the bombardment-resistant glass plane, in which at least a plurality of the further individual panes (16) have a bombardment-resistant planking means (18) arranged at at least one of the free edge portions of said plurality of further individual panes along the corresponding edges, wherein the spacer (10) itself is kept free from the planking means (18).

2. An insulating glass element according to claim 1 wherein at least in the region of the planking means (18) the free edge portion of the spaced-apart individual panes (12, 14) projects beyond that of the further individual panes (16).

3. An insulating glass element according to claim 1 or claim 2 wherein the planking means (18) is such in respect of its cross-sectional thickness that the corresponding edge portion of the insulating glass element provides a flat edge.

4. An insulating glass element according to one of claims 1 to 3 wherein the planking means (18) is fixedly connected to the free edge portion of the insulating glass element.

5. An insulating glass element according to one of claims 1 to 4 wherein the planking means (18) is in the form of a closed frame (42) which is passed around the glass edge portion.

6. An insulating glass element according to claim 5 wherein the planking means (18) is welded at the corners.

7. An insulating glass element according to one of claims 1 to 6 wherein the planking means (18) is glued to the glass edge portion, for example by means of an epoxy resin adhesive, silicone or polysulphide.

8. An insulating glass element according to one of claims 1 to 7 wherein the planking means (18) is additionally secured by a shaped support member (34) which bears against the planking means and which is arranged on elements of a wall or facade structure.

9. An insulating glass element according to one of claims 1 to 8 wherein the planking means (18) comprises metal, in particular high-strength steel.

10. An insulating glass element according to claim 9 wherein the steel is stainless, hot-galvanised or coated to be corrosion-resistant.

11. An insulating glass element according to one of claims 1 to 5 or claims 7 and 8 wherein the planking means (18) comprises a high-strength plastics material, for example Kevlar or ceramic material.

## Revendications

1. Elément vitré isolant, pare-balles, en particulier pour constructions de façades ou de murs constitués de plusieurs de tels éléments, comportant au moins deux vitres individuelles (12, 14) maintenues à une certaine distance l'une de l'autre par des pièces d'écartement (10) afin de constituer un plan vitré isolant, et comportant également d'autres vitres individuelles (16) reliées l'une à l'autre et faisant suite à au moins l'une des premières vitres individuelles (12, 14) afin de former le plan vitré pare-balles, dans lequel au moins plusieurs des autres vitres individuelles (16) présentent sur au moins l'un de leurs bords libres le long des arêtes correspondantes un bordage (18) pare-balles, la pièce d'écartement (10) elle-même, étant dégagée de ce bordage (18).

2. Elément vitré isolant selon la revendication 1, dans lequel, au moins au voisinage du bordage (18), le bord libre des vitres individuelles (12, 14) fait saillie au-delà du bord des autres vitres individuelles (16).

3. Elément vitré isolant selon la revendication 1 ou 2, dans lequel l'épaisseur en coupe transversale du bordage (18) est conçue de telle sorte que le bord correspondant de l'élément vitré isolant vienne s'aligner dans le même plan dudit bordage.

4. Elément vitré isolant selon l'une des revendications 1 à 3, dans lequel le bordage (18) est relié de manière fixe au bord libre de l'élément vitré isolant.

5. Elément vitré isolant selon l'une des revendications 1 à 4, dans lequel le bordage 18 est réalisé sous la forme d'un cadre fermé 42, passant autour du bord vitré.

6. Elément vitré isolant selon la revendication 5, dans lequel le bordage (18) est soudé aux angles.

7. Elément vitré isolant selon l'une des revendications 1 à 6, dans lequel le bordage (18) est collé sur le bord vitré, par exemple au moyen d'un adhésif de résine époxyde, de silicone ou de polysulfure.

8. Elément vitré isolant, selon l'une des revendications 1 à 7, dans lequel le bordage (18) est pourvu d'un renfort complémentaire assuré par un profilé (34) s'appliquant sur le bordage et disposé sur des éléments d'une construction de façade ou de mur.

9. Elément vitré isolant, selon l'une des revendications 1 à 8, dans lequel le bordage (18) est constitué en métal, en particulier en acier à haute résistance.

10. Elément vitré isolant selon la revendication 9, dans lequel l'acier est inoxydable, galvanisé au feu ou couvert d'une couche anti-corrosion.

11. Elément vitré isolant selon l'une des revendications 1 à 5 ou 7 à 8, dans lequel le bordage (18) est constitué en une matière plastique à haute résistance, par exemple du Kevlar ou une matière céramique.
